# EUROPÄISCHE PATENTSCHRIFT

(11) **EP 1 387 333 B1**
(45) Veröffentlichungstag und Bekanntmachung des Hinweises auf die Patenterteilung: **28.09.2005**
(21) Anmeldenummer: 03016275.4
(22) Anmeldetag: 18.07.2003
(51) Int. Cl.: G08G 1/123, B60S 5/02

(54) **Verfahren zur Optimierung der Betankung von Schienenfahrzeugen**
Method to optimize the tanking of trains
Méthode d'optimisation du plein des locomotives

(30) Priorität: 30.07.2002 DE 10234544
(43) Veröffentlichungstag der Anmeldung: 04.02.2004
(73) Patentinhaber: Kräutler GmbH & Co, 6893 Lustenau (AT)
(72) Erfinder: Grabher, Reinhard, 6890 Lustenau (AT)
(74) Vertreter: Riebling, Peter

(56) Entgegenhaltungen:
- EP-A- 0 940 311
- DE-A- 10 021 721
- US-A- 4 752 899
- US-A- 5 359 522
- US-B1- 6 339 736

## Beschreibung

Die Erfindung betrifft ein Verfahren zur Optimierung der Betankung von Schienenfahrzeugen nach dem Oberbegriff des Patentanspruchs 1.

Schienenfahrzeuge (Diesellokomotiven) werden für den Transport von Gütern und Personen über Schienennetze verwendet. Derartige Schienenfahrzeuge müssen von Zeit zu Zeit betankt werden, wobei der Zeitpunkt der Betankung und evtl. auch der Preis des getankten Kraftstoffes von der jeweilig gewählten Tankstelle evtl. ortsabhängig unterschiedlich ist.

Nachdem ein derartiger Tank bis zu 1000 l Kraftstoff fasst, ist das mit dem Tankinhalt mitgeführte Gewicht für eine energiesparende Fahrweise des Schienenfahrzeuges unter anderem auch bestimmend.

Ferner ist für die Optimierung der Betankung des Schienenfahrzeuges auch die Beantwortung der Frage wichtig, ob es notwendig ist, ein derartiges Schienenfahrzeug aus Sicherheitsgründen stets mit einem ¾ oder einem halbvollen Tank zu fahren und hierbei das entsprechende Gewicht des Treibstoffes mitzuführen oder ob es nicht energiegünstiger ist, das Schienenfahrzeug bis möglichst an eine Sicherheitsgrenze des minimalen Füllstandes im Tank zu fahren, um das Schienenfahrzeug leichter und verbrauchsgünstiger zu betreiben.

Mit der EP 0 940 311 A2 ist ein Verfahren und eine Vorrichtung zur Betankung und Verhinderung von Kraftstoffüberlaufen offenbart. Die Vorrichtung weist einen Sensor zur Messung des Füllstandbedarfs im Lagerbereich auf, welcher Füllstandsdaten des Lagerbereichs zur Verfügung stellt. Ein GPS-System ermittelt die Position des Fahrzeugs, wobei ein Controller die erfassten Messwerte der momentanen geographischen Lage der Tankstellen und des momentanen Handelspreis speichert und kalkuliert die Füllmengentabellen des Fahrzeuges an den Tankstellen, auf der Grundlage der Ausgangsinformation jedes GPS-Systems und Sensors und des mindestes einen Grundpreis der Tankstellen.
Der Nachteil dieser Erfindung ist, dass eine Füllstandsmessung aufgrund der Flüssigkeitsbewegungen fehlerhaft ist und bereits durch eine leichte Neigung des Fahrzeuges deutlich verfälscht wird. Des weiteren weist die wenig präzise Fertigung des Tankes eine fehlerhafte Zuordnung des Füllstandes zu einer Füllmenge auf, wobei unterschiedliche Temperaturen aufgrund der veränderten Dichte eine zusätzliche Fehlerquelle aufweist.

Der Erfindung liegt deshalb die Aufgabe zugrunde, ein Verfahren zur Betankung von Schienenfahrzeugen vorzuschlagen, welches eine optimale Betankung gewährleistet.

Zur Lösung der gestellten Aufgabe ist die Erfindung dadurch gekennzeichnet, dass in Abhängigkeit von einer sehr genauen Kraftstoff-Verbrauchsmessung des Verbrennungsmotors der momentane Kraftstoff-Verbrauch bestimmt wird und in einen Hauptrechner eingegeben wird, dass ferner ein aufsummierter Verbrauch errechnet wird, aus dem der Füllstand des Tankes bestimmt wird, dass der Hauptrechner im Schienenfahrzeug über ein GSM-System oder ähnliche Systeme mit einem Leitrechner verbunden ist und dass ferner in den Hauptrechner der Schienenfahrzeuge die Signale eines GPS-Systems oder ähnliche Systeme zwecks Ortsbestimmung des Schienenfahrzeuges eingespeist werden.

Mit der gegebenen technischen Lehre ergibt sich der wesentliche Vorteil, dass es nun erstmals möglich ist, über ein GSM-System den aktuellen Verbrauch und den über einen Zeitabstand summierten Verbrauch eines Schienenfahrzeuges an einem beliebigen Ort des Schienennetzes zu bestimmen und entsprechend zu beeinflussen.

Die genannten Daten des Ortes des momentanen und des aufsummierten Füllstandes werden also über die GSM-Verbindung dem Leitrechner mitgeteilt und dieser entscheidet nun, welche der im Schienennetz befindlichen Tankstellen das Schienenfahrzeug anfahren soll.

Der Leitrechner kennt auch die Kapazität der einzelnen Tankstellen und sorgt deshalb vor, dass nicht beispielsweise eine Vielzahl von Schienenfahrzeugen zur gleichen Tankstelle dirigiert werden, weil dann deren Kapazität erschöpft sein würde. Aufgrund der Geschwindigkeit des Schienenfahrzeuges im Schienennetz kann der Leitrechner nämlich die aktuelle Geschwindigkeit des Schienenfahrzeuges bestimmen und gleichzeitig mit dem Füllstand des Tanks in Verbindung setzen. Es kann beispielsweise immer dafür gesorgt werden, dass das Schienenfahrzeug stets nur mit halbgefülltem Tank sich im Schienennetz befindet, weil entsprechend weniger Gewicht mittransportiert werden muss. Selbstverständlich wird immer auf eine gewisse Sicherheitsreserve geachtet.

Es kann manchmal sinnvoll sein, nicht voll zu tanken, weil sich das Schienenfahrzeug im nicht vollgetankten Zustand energiesparender fahren lässt als vergleichsweise im vollgetankten Zustand. Der Leitrechner mit seinem Flotten-Management-Programm entscheidet hierüber selbständig.

Ebenso ist es mit dem genannten Flotten-Management nun erstmals möglich, dass aufgrund der Überwachung des momentanen Treibstoffverbrauchs des jeweiligen Schienenfahrzeuges Alarm gegeben wird, wenn ein zu hoher Verbrauch festgestellt wird. Es könnte dann beispielsweise das Schienenfahrzeug zu einer Service-Stelle beordert werden, wo die Ursachen für den hohen Treibstoffverbrauch aufgeklärt werden.

Schließlich dient das Flotten-Management und die Überwachung des Verbrauchs von Schienenfahrzeugen auch zu dem Zweck, Treibstoff-Diebstähle möglichst rasch aufzuklären oder überhaupt zu verhindern.

Zu diesem Zweck ist vorgesehen, dass der im Schienefahrzeug angeordnete Rechner mit einem Langzeit-Datenspeicher (Daten-Logger) versehen ist, der geeignet ist, den momentanen und/oder absoluten Treibstoffverbrauch über eine längere Zeit von z. B. eine Woche aufzuzeichnen und als Protokoll oder Datensatz wiederzugeben.

Nach beispielsweise einer Woche wird der Daten-Logger ausgelesen und es können Unregelmäßigkeiten bezüglich des Kraftstoffverbrauchs oder eine widerrechtliche Kraftstoffentnahme festgestellt werden. Die Anordnung eines Datenloggers im Rechner des Schienenfahrzeuges soll im übrigen in Kombination mit dem GSM-System und/oder GPS-System oder auch ohne beide vorgenannten Systeme oder nur mit einem der vorgenannten Systeme als erfindungswesentlich beansprucht werden.

Der Leitrechner könnte bestimmte Ortsinformationen gespeichert haben, an denen es wiederholt zu Diebstählen gekommen ist und die Schienenfahrzeuge durch derartige Orte hindurch dirigieren. Ebenso ist es möglich, sofort einen Treibstoffdiebstahl - unter Einbeziehung des Ortes - festzustellen, um dann zeitnahe die an diesem Ort befindlichen Personen zu überwachen.

Die Erfindung ist im übrigen nicht auf die Verwendung eines GSM-Systems beschränkt. Es können auch andere Systeme verwendet werden, wie sie beispielsweise in den USA oder in Japan gebräuchlich sind. Wichtig ist lediglich, dass über die Datenverbindung zwischen dem Schienenfahrzeug und dem Leitrechner die vorher erwähnten Daten ausgetauscht werden.

Statt dem hier genannten GPS-System können auch andere Systeme zur ortsabhängigen Bestimmung des aktuellen Ortes des Schienenfahrzeuges verwendet werden. So können beispielsweise von der Schiene selbst auf das Schienenfahrzeug Signale abgegeben werden, so dass das Schienenfahrzeug die jeweilige Ortsinformation aus dem Schienennetz selbst erhält.

Ebenso ist es möglich, statt des GPS-Systems das sogenannte Galileo-System zu verwenden.

Die Erfindung bezieht sich auf dieselgetriebene Schienenfahrzeuge, insbesondere also Personen und Güterloks, aber auch Triebwaren, Rangier-Lokomotiven und alle anderen, dieselgetriebenen Schienenfahrzeuge.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Schaubild zur hochgenauen Verbrauchsmessung des Verbrauchs eines Dieselmotors,
- Figur 2:: schematisiert die Anordnung der verschiedenen Elemente im Schienenfahrzeug,
- Figur 3:: ein Übersichts-Schaubild über ein Schienennetz.

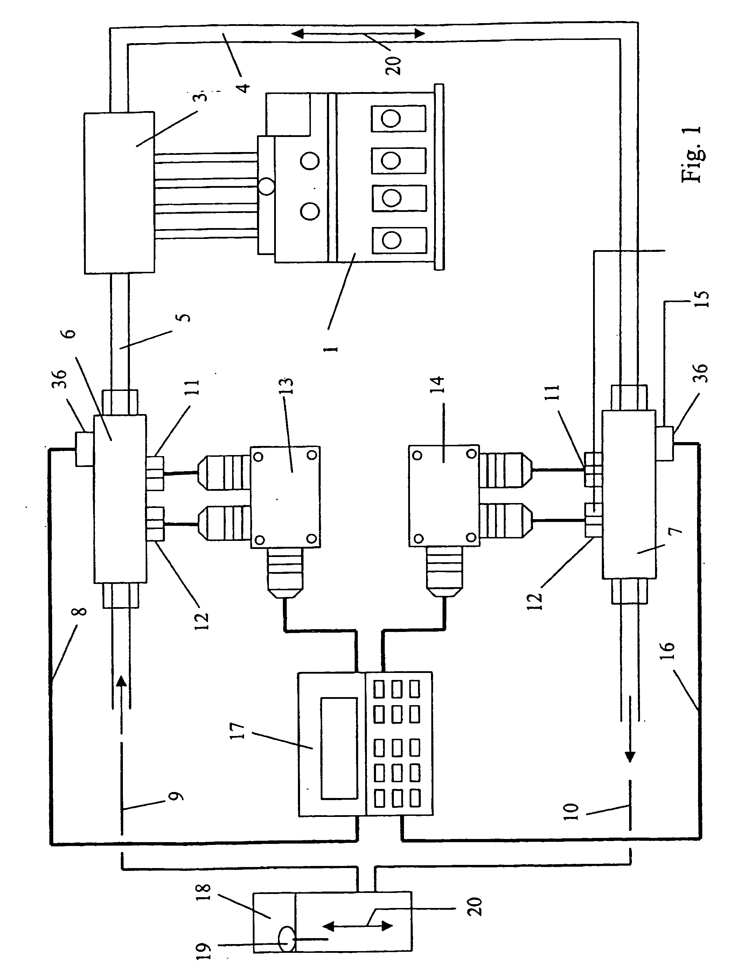

In Figur 1 wird eine hochgenaue Verbrauchsmessung des Verbrauchs eines Dieselmotors 1 dargestellt.

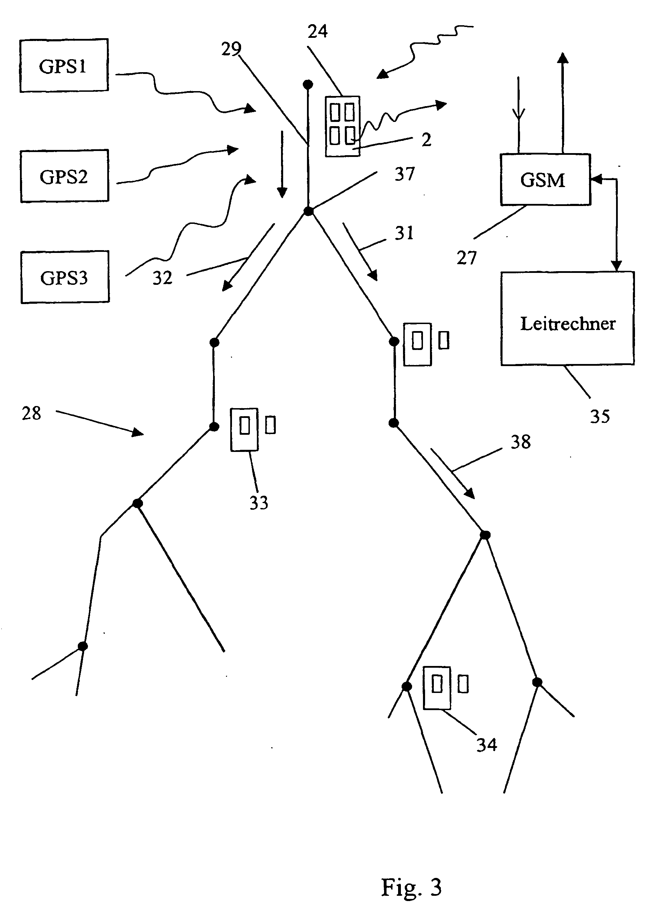

Dieser ist in einem Schienenfahrzeug 2 gemäss Figur 3 eingebaut.

Der Dieselmotor 1 ist mit einer Einspritzpumpe 3 verbunden, über welche der Dieselkraftstoff mit hohem Druck in die Verbrennungsräume des Dieselmotors 1 eingespeist wird.

Der Einlauf der Einspritzpumpe 3 liegt in einem Zulauf 5, dem ein erstes Volumeter 6 zwecks Verbrauchsmessung eingeschaltet ist.

Dieses Volumeter 6 besteht aus einem Doppel-Schraubenspindel-Volumeter, welches bevorzugt mit zwei Sensoren 11, 12 arbeitet. Diese Sensoren 11, 12 nehmen die Drehzahl einer der vom Kraftstoff drehangetriebenen Spindeln ab.

Über einen Sensor 36 wird die Temperatur des Dieselkraftstoffes abgenommen und über die Leitung 8 einem Rechner 17 eingespeist.

Das obere Volumeter 6 liegt im Tankzulauf 9 eines Tanks 18.

Die Sensoren 11, 12 sind durch entsprechende Signalleitungen mit einem ImpulsSelektor 13 verbunden, der seinerseits wieder über eine Signalleitung mit dem Rechner 17 verbunden ist.

Im Tankrücklauf 10 des Tanks 18 ist ein ähnliches Volumeter 7 eingeschaltet. Zusätzlich kann noch über das Volumeter 7 eine Massenmessung 15 des durchfließenden Kraftstoffes erfolgen. Diese Masse wird im Rechner 17 ermittelt.

Der Motorverbrauch kann somit auch über die Masse pro Zeiteinheit des Dieselkraftstoffes bestimmt werden.

Auch hier werden die Signale der beiden Sensoren 11, 12 in einen ImpulsSelektor 14 eingespeist und dessen Signale werden dem Rechner 17 zugeführt.

Über die Leitung 16 wird auch hier das Temperatursignal dem Rechner 17 eingespeist.

Mit den Impuls-Selektoren 13,14 erfolgt eine hochgenaue Verbrauchsmessung im Kraftstoff-System 4, auch wenn der Kraftstoff in Richtung des Doppelpfeiles 20 stark pulsiert.

Mit den beiden Impuls-Selektoren wird nämlich stets bestimmt, welches der beiden Volumeter 6 oder 7 in Vorwärtsrichtung und welches in Rückwärtsrichtung angetrieben wird, und es werden dann stets Differenz-Signale gebildet, um eine hochgenaue Verbrauchsmessung zu gewährleisten.

Auf diese Weise kann vollständig auf eine Füllstandsmessung 19 im Tank 18 verzichtet werden.

Es kann aber auch noch zusätzlich vorgesehen werden, dass eine derartige Füllstandsmessung 19 vorhanden ist.

Über die Abweichung der Temperatur von dem Sensor 36 im Vorlauf im Vergleich zu der Temperatur über den Sensor 36 im Rücklauf können damit auch unterschiedliche Temperaturausdehnungen des Kraftstoffes erfasst und in die Verbrauchsmessung einbezogen werden.

Es findet also mit den beiden Volumetern 6, 7 eine richtungsunabhängige Messung des verbrauchten Kraftstoffes statt. Die genannten Volumeter 6, 7 sind unempfindlich gegen hochfrequente Änderungen des Durchflusses. Als Verdrängerzähler folgen die Mess-Spindeln jeder Bewegung der Flüssigkeitssäule. Die Reaktion ist so direkt, dass man den Eindruck hat, als gäbe es eine feste mechanische Kopplung zwischen Flüssigkeit und Mess-Spindeln.

Damit ist die Messung unabhängig von der Viskosität und unabhängig von der Temperatur des Kraftstoffes.

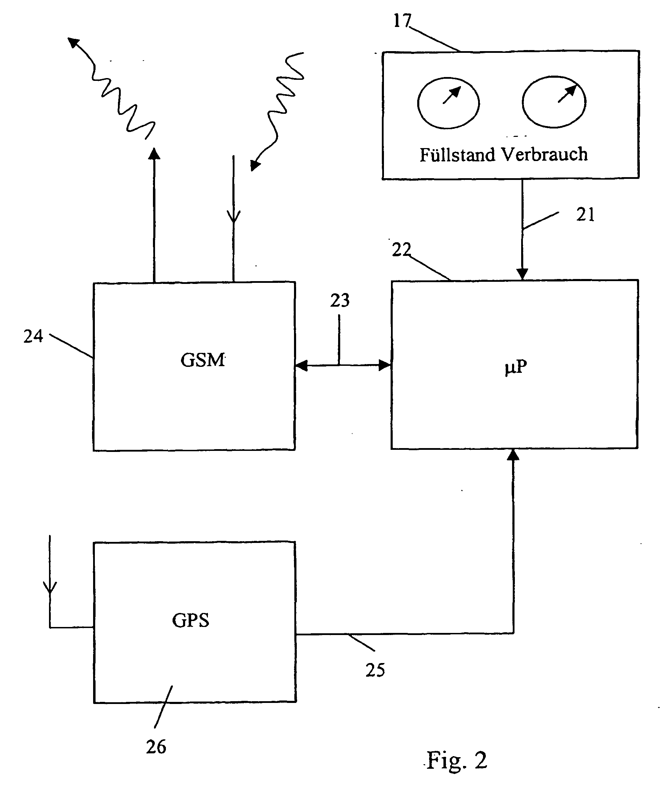

In Figur 2 ist dargestellt, dass die Daten des Rechners 17 über die Leitung 21 einem Hauptrechner 22 eingespeist werden, der sich im Schienenfahrzeug 2 befindet.

Gleichzeitig ist dieser Hauptrechner 22 über die Leitung 25 mit einem GPS-System 26 verbunden, welches dem Hauptrechner 22 die aktuelle Ortsinformation des Schienenfahrzeugs im Schienennetz 28 einspeist.

Der Hauptrechner 22 ist über eine Leitung 23 mit einem GSM-System 24 verbunden, welches damit über eine Datenverbindung mit einer beliebigen ortsfesten Basisstation 27 in Verbindung steht.

Die Basisstation 27 ist über das normale Telefonnetz oder über eine Standleitung oder über eine sonstige Datenverbindung mit dem Leitrechner 35 verbunden.

Die Figur 3 zeigt die Vorteile des erfindungsgemäßen Systems.

Wenn sich beispielsweise das Schienenfahrzeug 2 am Standort 29 im Schienennetz 28 befindet, muss nun über die GSM-Verbindung der Ort des Schienenfahrzeuges, der momentane Verbrauch und der Summenverbrauch übermittelt werden, so dass hierüber der Füllstand im Tank 18 bestimmt wird.

Diese Daten werden dem Leitrechner 35 eingespeist. Dieser entscheidet nun, welchen weiteren Weg das Schienenfahrzeug - in Abhängigkeit von dem Fahrplan und sonstigen fahrtechnischen Umständen - im Schienennetz 28 nehmen soll. Insbesondere entscheidet der Leitrechner 35, ob das Schienenfahrzeug an der eingezeichneten Weiche 37 in Pfeilrichtung 32 zu der Tankstelle 33 fahren soll oder in Pfeilrichtung 31 zu der näheren Tankstelle 30. Evtl. wird auch entschieden, dass das Schienenfahrzeug 2 zwar in Pfeilrichtung 31 über die Weiche 37 fahren soll, aber der Füllstand im Tank noch ausreicht, die weiter entfernte Tankstelle 34 anzufahren.

Eine solche Entscheidung wird nicht nur in Abhängigkeit vom Füllstand im Tank 18 getroffen, sondern auch von der aktuellen Geschwindigkeit des Schienenfahrzeuges 2, von dem momentanen Verbrauch und dem vorhersagbaren, zukünftigen Verbrauch und evtl. auch von Preisinformationen der jeweiligen Tankstellen 30, 33, 34.

Insbesondere kann es so zweckmäßig sein, das Fahrzeug nur an der Tankstelle 30 mit halbem Tank aufzufüllen, um dann über eine energieoptimierte Strecke bis zur Tankstelle 34 zu fahren. Auf diese Weise wird vermieden, dass das Schienenfahrzeug beispielsweise an einer Tankstelle 30 voll betankt wird und dann mit vollem Tank und relativ hohem Nutzgewicht eine große Steigstrecke 38 zwischen der Tankstelle 30 und der Tankstelle 34 überwinden muss.

Es wird also wesentliche Energie gespart, wenn das Schienenfahrzeug lediglich vor der Steigungsstrecke 38 mit halbem Tank betankt wird und dieses dann entsprechend verbrauchsoptimiert durchfährt.

Der Leitrechner 35 führt im übrigen auch die anderen Funktionen aus, die bereits schon im allgemeinen Beschreibungsteil erwähnt wurden.

### Zeichnungs-Legende

- 1: Dieselmotor
- 2: Schienenfahrzeug
- 3: Einspritzpumpe
- 4: Kraftstoffsystem
- 5: Zulauf
- 6: Volumeter
- 7: Volumeter
- 8: Leitung
- 9: Tankzulauf
- 10: Tankrücklauf
- 11: Sensor
- 12: Sensor
- 13: Impulsselektor
- 14: Impulsselektor
- 15: Massenmessung
- 16: Leitung
- 17: Rechner
- 18: Tank
- 19: Füllstandsmessung
- 20: Doppelpfeil
- 21: Leitung
- 22: Hauptrechner
- 23: Leitung
- 24: GSM-System
- 25: Leitung
- 26: GPS-System
- 27: Basisstation
- 28: Schienennetz
- 29: Standort
- 30: Tankstelle
- 31: Pfeilrichtung
- 32: Pfeilrichtung
- 33: Tankstelle
- 34: Tankstelle
- 35: Leitrechner
- 36: Sensor
- 37: Weiche
- 38: Steigungsstrecke

## Patentansprüche

1. Vorrichtung zur Optimierung der Betankung von Schienenfahrzeugen (2) mit Kraftstoff für einen im Schienenfahrzeug befindlichen Verbrennungsmotor (1), mit einer genauen Kraftstoff-Verbrauchsmessung des Verbrennungsmotors (1) und einem internen Hauptrechner (22), der einen aufsummierten Verbrauch errechnet, wobei der interne Hauptrechner (22) im Schienenfahrzeug (2) über ein GSM-System (24, 27) mit einem externen Leitrechner (35) verbunden ist und dass ferner in den internen Hauptrechner (22) des Schienenfahrzeugs (2) die Signale eines GPS-Systems (26) oder ähnliche Systeme zwecks Ortsbestimmung des Schienenfahrzeuges (2) eingespeist sind, **dadurch gekennzeichnet, dass**
zur genauen Kraftstoff-Verbrauchsmessung am Vorlauf der Einspritzpumpe (3) ein erstes Volumeter (6) mit zwei Sensoren (11, 12) zur Drehrichtungs- und Drehzahlerkennung eingeschaltet ist,
dass über jeweils eine Sensor (36) die Temperatur des Dieselkraftstoffes im Vor- und Rücklauf der Einspritzpumpe (3) erfasst ist und die Differenz in die Verbrauchsmessung einbezogen ist,
das im Rücklauf (10) der Einspritzpumpe (3) ein zweites Volumeter (7) mit Sensoren (11, 12) zur Drehrichtungs- und Drehzahlerkennung eingeschaltet ist, und
dass die Drehrichtung der beiden Volumeter (6, 7) über Impulsselektoren (13, 14) bestimmt ist und der genaue Kraftstoffverbrauch aus der Differenz der Signale der beiden Volumeter gebildet ist.

2. Vorrichtung nach Anspruch 1, **dadurch gekennzeichnet, dass** die Daten des momentanen Ortes (29) und des momentanen und des aufsummierten Füllstandes über die GSM-Verbindung (24) dem Leitrechner (35) mitgeteilt werden und dieser entscheidet, welche der im Schienennetz (28) befindlichen Tankstellen (30, 33, 34) das Schienenfahrzeug (2) anfährt.

3. Vorrichtung nach Anspruch 1 oder 2, **dadurch gekennzeichnet, dass** der Leitrechner (35) die aktuelle Geschwindigkeit des Schienenfahrzeuges bestimmt und gleichzeitig mit dem Füllstand des Tanks (18) in Verbindung setzt.

4. Vorrichtung nach einem der Ansprüche 1 bis 3, **dadurch gekennzeichnet, dass** das Volumete ein Schraubenvolumeter (6,7) ist.

5. Vorrichtung nach einem der Ansprüche1 bis 4, **dadurch gekennzeichnet, dass** der Rechner (17) zur Erfassung des Kraftstoffverbrauches mit einem Langzeit-Datenlogger verbunden ist.

6. Vorrichtung nach einem der Ansprüche 1 bis 5, **dadurch gekennzeichnet, dass** der Durchflussmesser bzw. dessen Rechner (22) über eine GSM-Verbindung (24) mit einem externen Leitrechner verbunden ist.

7. Vorrichtung nach einem der Ansprüche 1 bis 6, **dadurch gekennzeichnet, dass** der Durchflussmesser bzw. dessen Rechner (22) mit einem GPS-System (26) gekoppelt ist.

## Claims

1. Apparatus for optimizing the refuelling of rail vehicles (2) with fuel for an internal combustion engine (1) located in the rail vehicle, with precise measurement of the fuel consumption of the internal combustion engine (1) and an internal main computer (22) which computes a cumulative consumption, wherein the internal main computer (22) in the rail vehicle (2) is connected via a GSM system (24, 27) to an external master computer (35) and moreover the signals of a GPS system (26) or similar systems are fed into the internal main computer (22) of the rail vehicle (2) for the purpose of determining the location of the rail vehicle (2), **characterized in that**
for the precise measurement of fuel consumption, a first volumeter (6) with two sensors (11, 12) for detecting sense and rate of rotation is connected on the feed line of the injection pump (3),
**in that** the temperature of the diesel fuel is detected in the feed and return lines of the injection pump (3) in each case by a sensor (36), and the difference is included in the consumption measurement,
**in that** a second volumeter (7) with sensors (11, 12) for detecting sense and rate of rotation is connected in the return line (10) of the injection pump (3), and
**in that** the sense of rotation of the two volumeters (6, 7) is determined by pulse selectors (13, 14), and the precise fuel consumption is obtained from the difference between the signals of the two volumeters.

2. Apparatus according to Claim 1, **characterized in that** the data on present location (29) and present and cumulative filling level are communicated via the GSM link (24) to the master computer (35) and the latter decides at which of the refuelling stations (30, 33, 34) in the rail network (28) the rail vehicle (2) is to call.

3. Apparatus according to Claim 1 or Claim 2, **characterized in that** the master computer (35) determines the current speed of the rail vehicle and simultaneously relates it to the filling level of the tank (18).

4. Apparatus according to any one of Claims 1 to 3, **characterized in that** the volumeter is a propeller volumeter (6, 7).

5. Apparatus according to any one of Claims 1 to 4, **characterized in that** the computer (17) for recording the fuel consumption is connected to a long-term data logger.

6. Apparatus according to any one of Claims 1 to 5, **characterized in that** the flowmeter or its computer (22) is connected via a GSM link (24) to an external master computer.

7. Apparatus according to any one of Claims 1 to 6, **characterized in that** the flowmeter or its computer (22) is coupled to a GPS system (26).

## Revendications

1. Dispositif pour optimiser le ravitaillement en carburant de véhicules ferroviaires (2), pour un moteur à combustion interne (1) situé dans le véhicule ferroviaire, avec une mesure précise de la consommation de carburant du moteur (1) et un ordinateur central interne (22) qui calcule une consommation totalisée, l'ordinateur central interne (22) prévu dans le véhicule ferroviaire (2) étant relié à un ordinateur pilote externe (35) par l'intermédiaire d'un système GSM (24, 27) et les signaux d'un système GPS (26) ou d'autres systèmes étant entrés dans l'ordinateur principal interne (22) du véhicule (2) en vue d'une localisation dudit véhicule (2), **caractérisé**
**en ce que** pour la mesure précise de la consommation de carburant, un premier volumètre (6) avec deux capteurs (11, 12) destinés à détecter le sens et la vitesse de rotation est monté à l'entrée de la pompe à injection (3),
**en ce que** par l'intermédiaire de capteurs respectifs (36), la température du gazole est détectée à l'entrée et à la sortie de la pompe à injection (3) et la différence est intégrée à la mesure de la consommation,
**en ce qu'**un second volumètre (7) avec deux capteurs (11, 12) destinés à détecter le sens et la vitesse de rotation est monté à la sortie (10) de la pompe à injection (3), et
**en ce que** le sens de rotation des deux volumètres (6, 7) est défini par l'intermédiaire de sélecteurs d'impulsions (13, 14) et la consommation précise du carburant est formée à partir de la différence des signaux des deux volumètres.

2. Dispositif selon la revendication 1, **caractérisé en ce que** les données du lieu momentané (29) et du niveau momentané et du niveau totalisé sont transmises par l'intermédiaire de la liaison GSM (24) à l'ordinateur pilote (35) et celui-ci décide vers lequel des postes de ravitaillement (30, 33, 34) situé dans le réseau ferroviaire (28) le véhicule ferroviaire (2) se dirigera.

3. Dispositif selon la revendication 1 ou 2, **caractérisé en ce que** l'ordinateur pilote (35) définit la vitesse actuelle du véhicule ferroviaire et la met en même temps en relation avec le niveau du réservoir (18).

4. Dispositif selon l'une des revendications 1 à 3, **caractérisé en ce que** le volumètre est un volumètre à vis (6, 7).

5. Dispositif selon l'une des revendications 1 à 4, **caractérisé en ce que** l'ordinateur (17) pour détecter la consommation de carburant est relié à un enregistreur de données de longue durée.

6. Dispositif selon l'une des revendications 1 à 5, **caractérisé en ce que** le débitmètre ou son ordinateur (22) est relié par une liaison GSM (24) à un ordinateur pilote externe.

7. Dispositif selon l'une des revendications 1 à 6, **caractérisé en ce que** le débitmètre ou son ordinateur (22) est couplé à un système GPS (26).
